# EUROPÄISCHE PATENTSCHRIFT

(11) **EP 0 568 562 B1**
(45) Veröffentlichungstag und Bekanntmachung des Hinweises auf die Patenterteilung: **08.11.1995**
(21) Anmeldenummer: 92902954.4
(22) Anmeldetag: 16.01.1992
(51) Int. Cl.: G11B 17/22, G11B 17/04

(54) **PLATTENABSPIELGERÄT**
JUKEBOX
JUKE-BOX

(30) Priorität: 22.01.1991 DE 4101693
(43) Veröffentlichungstag der Anmeldung: 10.11.1993
(73) Patentinhaber: NSM AKTIENGESELLSCHAFT, 55411 Bingen (DE)
(72) Erfinder: MENKE, Wilhelm, D-6507 Ingelheim (DE)
(74) Vertreter: Becker, Bernd, Dipl.-Ing.
(86) Internationale Anmeldenummer: DE9200027
(87) Internationale Veröffentlichungsnummer: WO9213343

(56) Entgegenhaltungen:
- DE-A- 3 818 502
- DE-A- 3 922 721
- Patent abstracts of Japan, unexamined applications, P Field, vol.10, No. 89, 08. April 1986, the Patent Office Japanese Government, see p. 21 P 444 KOKAI - No. 60-224 144 (SHARP KK)

## Beschreibung

Die Erfindung bezieht sich auf Plattenabspielgerät mit mindestens einem Plattenspeichermagazin, das eine Vielzahl übereinanderliegend in Aufnahmefächer gelagerter, jeweils eine Platte aufnehmender Plattenhalter umfaßt, und mit einer in Stapelrichtung des Plattenspeichermagazins verfahrbaren Transporteinrichtung zur Hin- und Herbeförderung einer gewünschten Platte mit dem zugehörigen Plattenhalter zwischen dem Aufnahmefach und einer Abspieleinheit, wobei die Transporteinrichtung eine auf dieser horizontal verfahrbare Auszugeinrichtung für die Plattenhalter, einen Plattenandrücker für die Verspannung der abzuspielenden Platte mit dem Plattenteller der Abspieleinheit und einen Tragarm für die Aufnahme eines Plattenhalters aufweist.

Ein derartiges Plattenabspielgerät ist aus der DE 39 22 721 A1 bekannt. Hierbei ist der Tragarm der Transporteinrichtung für die Aufnahme eines Plattenhalters mit darin abgelegter Platte U-förmig ausgebildet. Die Auszugeinrichtung der Transporteinrichtung befördert den Plattenhalter mit der ausgewählten Platte auf entsprechend angeordnete Tragschienen auf der Oberseite des Tragarmes. In der endgültigen Lage des Plattenhalters auf dem Tragarm, in der die Platte konzentrisch zu dem Plattenteller der Abspieleinheit liegt, ist sowohl der Plattenhalter als auch die Platte zum einen nicht vor einer Verschmutzung und zum anderen nicht vor einem unsachgemäßen Zugriff geschützt. Wenn kein Abspielvorgang einer Platte stattfindet, dann steht der Tragarm der Transporteinrichtung leer in seiner Ausgangsposition über der Abspieleinheit. In diesem Falle unterliegt aufgrund der U-förmigen und damit offenen Gestaltung des Tragarmes die Abspieleinheit und insbesondere deren Abspielkopf einer Verschmutzung sowie der Gefahr einer unsachgemäßen Behandlung.

Der Erfindung liegt die Aufgabe zugrunde, ein Plattenabspielgerät der eingangs genannten Art zu schaffen, das bei einem einfachen und kompakten Aufbau eine gegen äußere Einflüsse zuverlässige Abschirmung des Plattenhalters mit der gewünschten Platte während des Transportes zu und von der Abspieleinheit sowie der Abspieleinheit selbst gewährleistet.

Diese Aufgabe wird erfindungsgemäß dadurch gelöst, daß der verfahrbare Tragarm an seiner Oberseite mit einer den Plattenhalter mit innenliegender Platte übergreifenden Abdeckung versehen ist, die eine in der Längsachse der Antriebsachse des Plattentellers der Abspieleinheit liegende Öffnung aufweist, in die der Plattenandrücker eingesetzt ist.

Durch die erfindungsgemäße Maßnahme ist die Platte bzw. der Plattenhalter stets auf dem Beförderungsweg gegen eine Verschmutzung durch Staub und dergleichen geschützt. Gleichzeitig verhindert hierbei die Abdeckung einen Zugriff zu der Platte bzw. zu dem Plattenhalter, wodurch hierdurch möglicherweise an der Transporteinrichtung auftretende Beschädigungen ausgeschlossen sind. Findet kein Abspielvorgang einer Platte statt, dann befindet sich die Transporteinrichtung mit dem Tragarm in ihrer Ausgangsstellung unmittelbar über der Abspieleinheit. In dieser Stellung schirmt die Abdeckung des Tragarmes die Abspieleinheit vollständig gegen eine Verschmutzung und einen unsachgemäßen Zugriff ab, was insbesondenre für den Abspielkopf der Abspieleinheit von Bedeutung ist. Durch die Integration des Plattenandrückers in die Abdeckung ergibt sich eine einfache Anordnung desselben.

Um einerseits während der Beförderung der ausgewählten Platte die auf dieser aufgedruckten Kenndaten erkennen zu können und um andererseits während des Abspielens der Platte deren Drehbewegung beobachten zu können, ist nach einer vorteilhaften Ausgestaltung der Erfindung die Abdeckung des Tragarmes im Bereich der Platte als durchsichtige Scheibe ausgebildet.

Bevorzugt umfaßt hierbei der Plattenandrücker einen mit relativ großem Spiel in der Öffnung der Abdeckung angeordneten Plattenandrück-Einsatz mit einem mittigen Magneten, der in der Ruhestellung des Plattenandrück-Einsatzes mit einer in einen die Öffnung abschließenden Deckel eingesetzten, magnetisierbaren Stahlplatte und in der Arbeitsstellung des Plattenandrück-Einsatzes mit der magnetisierbaren Antriebsachse des Plattentellers der Abspieleinheit zusammenwirkt. Alternativ ist es auch möglich den Deckel selbst aus magnetisierbarem Stahl herzustellen.

Nach einer vorteilhaften Weiterbildung des Erfindungsgegenstandes sind dem Tragarm an seiner Unterseite zwei im etwas größerem Abstand als die Breite des Plattenhalters parallel zueinander verlaufende Halteschienen für den Plattenhalter zugeordnet. Auf diese Weise bildet die Unterseite des Tragarmes mit dem aufgenommenen Plattenhalter und der darin befindlichen Platte praktisch eine ebene Fläche, die es ermöglicht, Abspieleinheiten unterschiedlicher Hersteller und damit unterschiedlicher äußerer Gestaltung in das Plattenabspielgerät einzusetzen. Da an der Unterseite des Tragarmes keine Vorsprünge oder dergleichen vorhanden sind, können diese auch nicht die Abwärtsbewegung des Tragarmes beim Aufsetzen der Platte auf den Plattenteller der Abspieleinheit durch ein Aufstoßen auf das Gehäuse der Abspieleinheit behindern.

Zur Vermeidung einer Leerfahrt der Transporteinrichtung zu der Abspieleinheit hin nach dem Auswählen einer Platte ist nach einer vorteilhaften weiteren Ausgestaltung der Erfindung dem Tragarm ein Sensor zur Überwachung des tatsächlichen Vorhandenseins einer Platte in dem Plattenhalter zugeordnet. Bevorzugt ist hierbei dem Tragarm eine Abtasteinrichtung zur Feststellung der Durchmessergröße der Platte in dem Plattenhalter zugeordnet.

Für die Kontrolle der richtigen Lage des Plattenhalters auf den Halteschienen des Tragarmes der Transporteinrichtung ist nach einer vorteilhaften Weiterbildung der Erfindung dem Tragarm mittig ein Sensor zur Überwachung der konzentrischen Lage der im Plattenhalter gespeicherten Platte zu dem Plattenteller der Abspieleinheit zugeordnet. Zweckmäßigerweise ist im Unterteil der Transporteinrichtung ein Sensor zur Feststellung der Endposition des Tragarmes über der Abspieleinheit angeordnet.

Zur Erreichung einer einfach aufgebauten und sicher funktionierenden Auszugeinrichtung der Transporteinrichtung, bei der ein in einem hin- und herbeweglichen Schlitten der Auszugeinrichtung ein- und ausfahrbar gelagerter Greifarm mit einer zugeordneten Ausnehmung des Plattenhalters in Eingriff bringbar ist und bei der der Greifarm in seiner Ausfahrstellung durch einen feststehenden Anschlag verbleibt, ist bei einer vorteilhaften Weiterbildung der Erfindung der Greifarm in der Ausgangsstellung des Schlittens durch eine Kulissensteuerung in seiner eingefahrenen Stellung derart gehalten, daß er bei einer Bewegung des Schlittens aus der Ausgangsstellung durch die Kulissensteuerung in die ausgefahrene, in die Ausnehmung des Plattenhalters eingreifende Stellung übergeht. Zweckmäßigerweise umfaßt die Kulissensteuerung eine mit dem Greifarm verbundene Kulisse und einen in eine Führungsnut der Kulisse eintauchenden, am Oberteil der Transporteinrichtung befestigten Stift. Die Führungsnut der Kulisse ist hierbei bevorzugt derart ausgebildet, daß bei einer Bewegung des Schlittens in die von einem Anschlag begrenzte Ausgangsstellung der Stift zunächst mit der Führungsnut in Eingriff kommt und anschließend über die Kulisse den Greifarm in seine eingefahrene Stellung im Schlitten zurückzieht.

Zwecks Erzielung einer einfachen Führung der Kulisse und des Greifarmes weist nach einer vorteilhaften Ausgestaltung der Erfindung der auf einer Tragstange gleitbeweglich geführte Schlitten auf seiner Oberseite zwei gegenüberliegende Flansche mit Durchbrechungen auf, in denen einerseits die Kulisse und andererseits der Greifarm gleitbeweglich geführt ist. Zweckmäßigerweise dient die Innenseite des den Greifarm aufnehmenden Flansches des Schlittens als Anschlag für die Kulisse in der Ausfahrstellung des Greifarmes.

Damit der Schlitten sich nicht um die Tragstange verschwenken kann, stützt sich bei einer Weiterbildung der Erfindung der Schlitten im Bereich des Greifarmes auf einer parallel zu der Tragstange verlaufenden Schiene ab. Bevorzugt ist der Kulisse des Greifarmes eine Lichtschranke zur Erkennung der Ausgangsstellung des Schlittens zugeordnet.

Für eine zuverlässige Hin- und Herbewegung des Schlittens ist nach einer vorteilhaften Weiterbildung der Erfindung der Schlitten über einen Riementrieb mit Schneckengetriebe und drehrichtungsumkehrbaren Motor antreibbar, wobei zwischen dem Schneckengetriebe und dem Antriebsrad des Zahnriemens des Riementriebes eine Rutschkupplung vorgesehen ist. Die Rutschkupplung ermöglicht die Verschiebung des Schlittens von Hand.

Um für die Bearbeitung zweier gegenüberliegender Plattenspeichermagazine mit derselben Transporteinrichtung zwei analog ausgebildete Auszugeinrichtungen verwenden zu können, ist zweckmäßigerweise bei zwei einander gegenüberliegenden Plattenspeichermagazinen auf der Tragstange ein weiterer Schlitten, der über einen weiteren Riementrieb mit Schnekkengetriebe, Rutschkupplung und drehrichtungsumkehrbarem Motor antreibbar ist, gleitbeweglich geführt, und zur Betätigung des Greifarmes dieses Schlittens ist dieser ebenfalls mit einer Kulisse mit einer entsprechend verlaufenden Führungsnut verbunden, der ein weiterer entsprechend am Oberteil der Transporteinrichtung angeordneter Stift zugeordnet ist.

Der der Erfindung zugrundeliegende Gedanke wird in der nachfolgenden Beschreibung anhand eines Ausführungsbeispieles, das in der Zeichnung dargestellt ist, näher erläutert. Es zeigt:

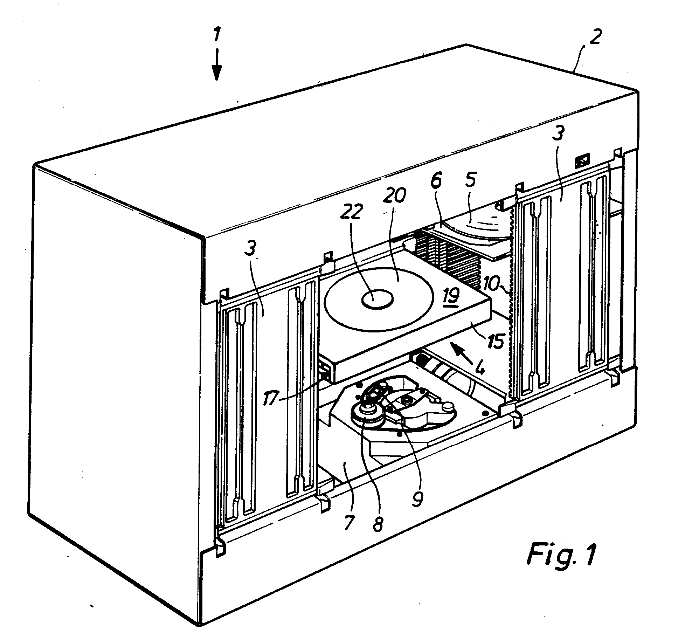

- Fig. 1: eine perspektivische Vorderansicht eines Plattenabspielgerätes nach der Erfindung,

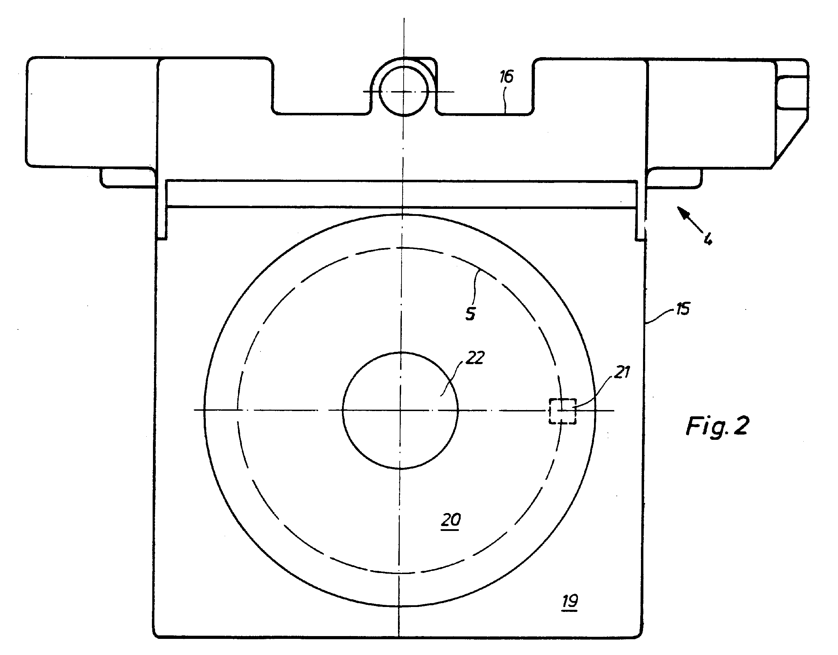

- Fig. 2: eine Draufsicht auf die Transporteinrichtung des Plattenabspielgerätes nach Fig. 1 im vergrößerten Maßstab und unter Weglassung des Antriebs für die Auf- und Abwärtsbewegung,

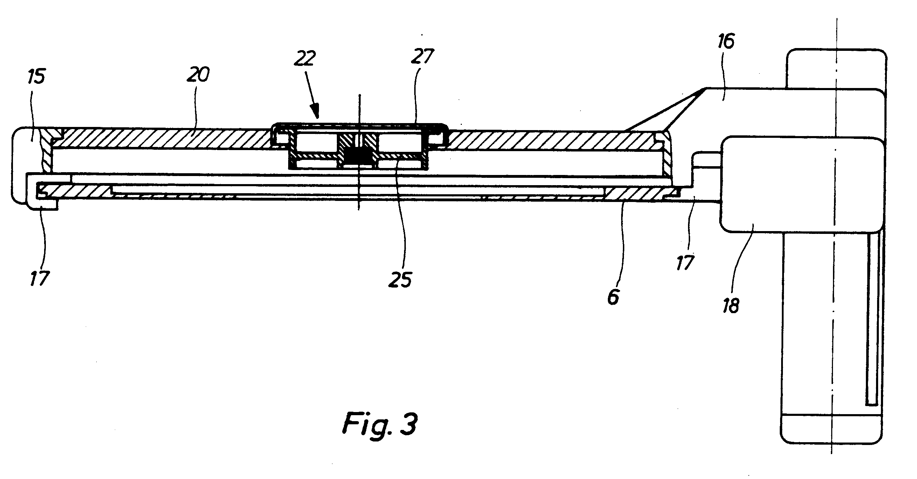

- Fig. 3: eine Seitenansicht der Transporteinrichtung nach Fig. 2, teilweise im Schnitt,

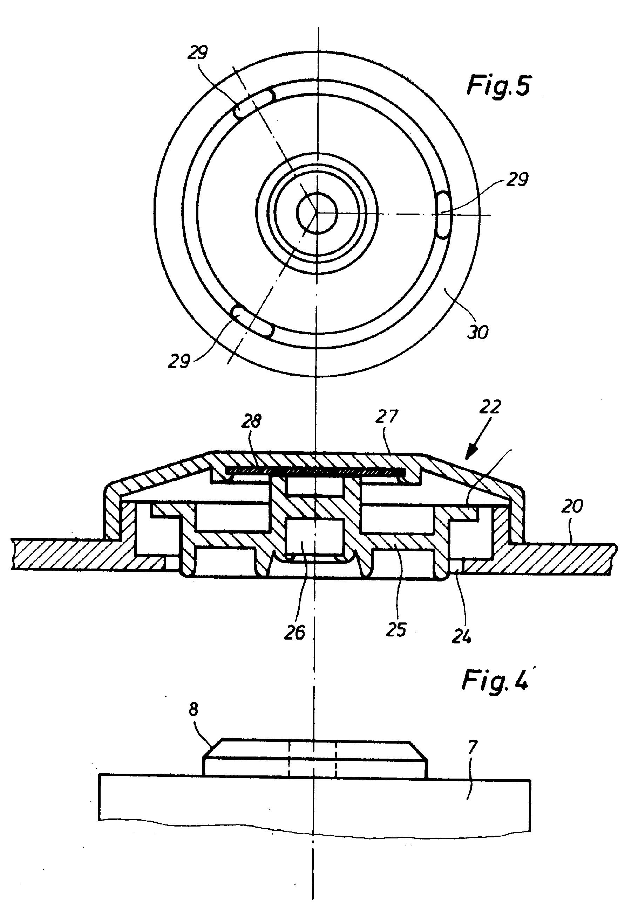

- Fig. 4: eine Einzeldarstellung des Plattenandrückers der Transporteinrichtung nach Fig. 3 in alternativer Ausführung im vergrößerten Maßstab mit zugehöriger Abspieleinheit,

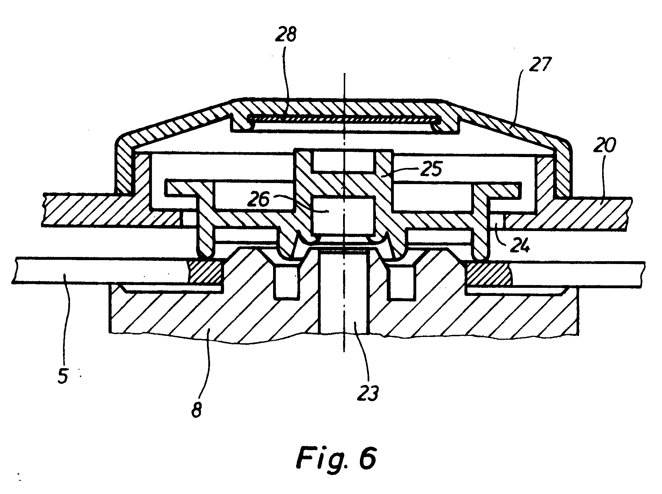

- Fig. 5: eine Teilunteransicht des Plattenandrückers nach Fig. 4,
- Fig. 6: eine Ansicht des Plattenandrückers nach Fig. 4 in der Arbeitsstellung,

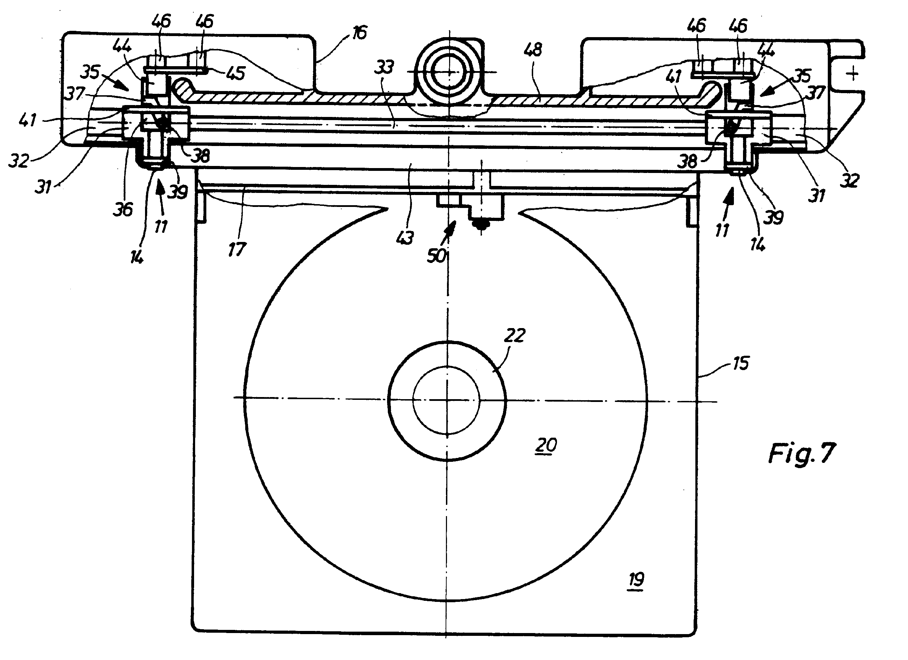

- Fig. 7: eine Darstellung der Transporteinrichtung nach Fig. 2, teilweise im Schnitt,

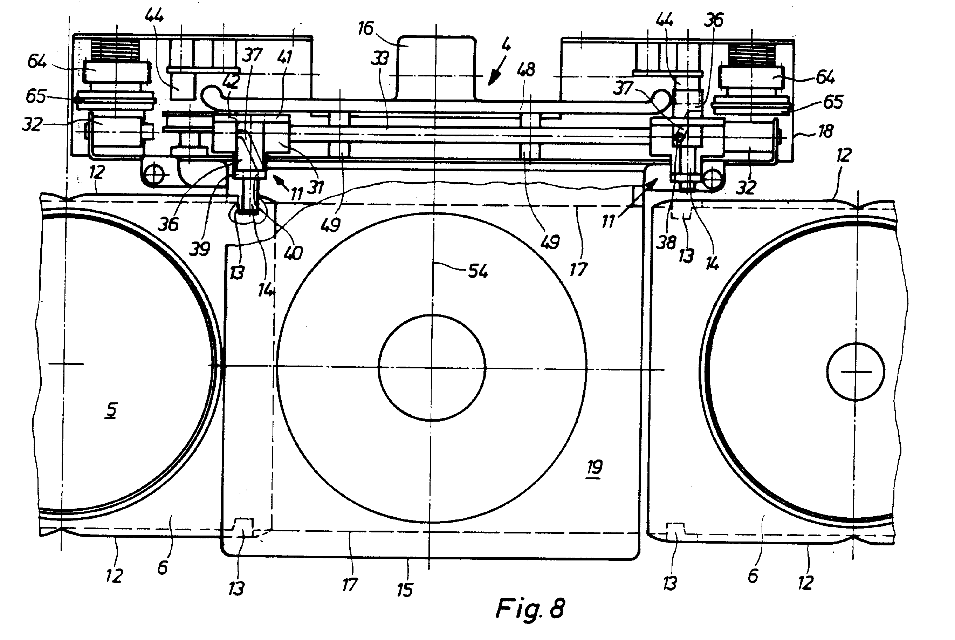

- Fig. 8: eine Darstellung der Transporteinrichtung nach Fig. 7 mit seitlich zugeordneten Plattenhaltern in Funktionsstellung,
- Fig. 9: eine Rückansicht der Transporteinrichtung nach Fig. 8, teilweise im Schnitt,

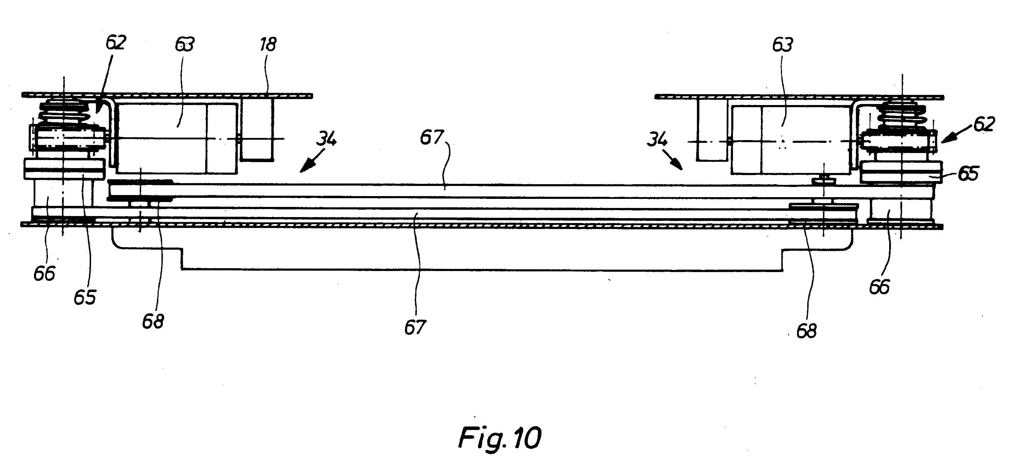

- Fig. 10: einen Querschnitt durch das Unterteil der Transporteinrichtung nach Fig. 9 und

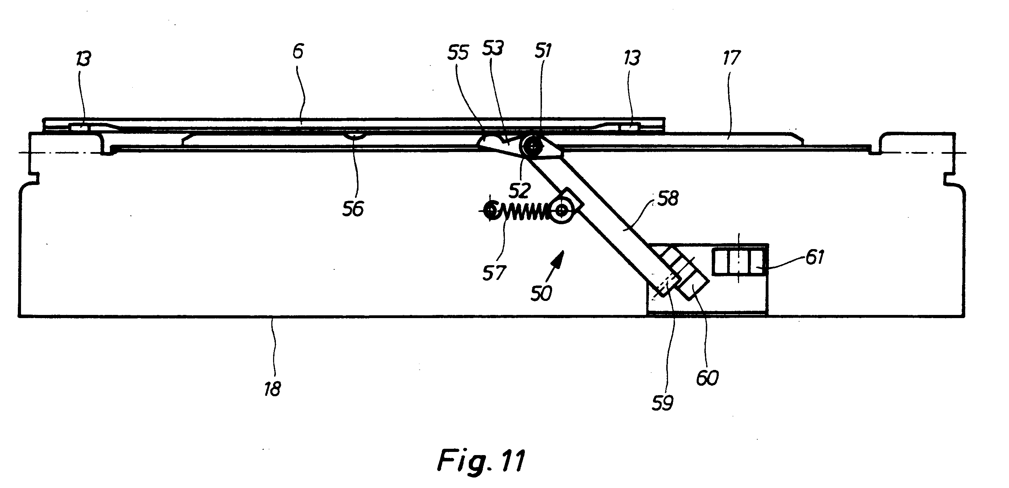

- Fig. 11: eine Vorderansicht der Darstellung nach Fig. 10.

Das Plattenabspielgerät 1, durch das auf Platten gespeicherte Informationen optisch ausgelesen und wiedergegeben werden können, besitzt ein Gehäuse 2 mit einer zugeordneten, nicht dargestellten Bedienungstafel, die verschiedene Tasten aufweist, beispielsweise eine Plattenauswahltaste, eine Plattenabspieltaste und eine Stoptaste. Seitlich im Gehäuse 2 sind gegenüberliegend auswechselbare Plattenspeichermagazine 3 angeordnet. In dem Raum zwischen den Plattenspeichermagazinen 3 befindet sich eine auf- und abverfahrbare Transporteinrichtung 4 für einen eine Platte 5 aufnehmenden Plattenhalter 6. Eine Abspieleinheit 7 mit einem angetriebenen Plattenteller 8 und einem verschwenkbaren Abspielkopf 9 ist feststehend zwischen und unterhalb der beiden gegenüberliegenden Plattenspeichermagazine 3 angebracht. Die untereinander identisch aufgebauten Plattenspeichermagazine 3 besitzen jeweils eine Vielzahl übereinanderliegend angeordneter Aufnahmefächer 10 für die Lagerung einer entsprechenden Anzahl an je eine Platte 5 aufnehmender Plattenhalter 6. In dem Aufnahmefach 10 ist der Plattenhalter 6 durch zwei gegenüberliegende am Plattenspeichermagazin 3 angebrachte nicht dargestellte Federelemente in seiner Lage gesichert. In dieser Lage steht der Plattenhalter 6 soweit über der Auszugseite des Plattenspeichermagazins 3 vor, daß er von einer Auszugeinrichtung 11 der Transporteinrichtung 4 erfaßt werden kann.

Der Plattenhalter 6 weist an seinen Längsseiten 12 jeweils im vorderen Bereich unterseitig eine Ausnehmung 13 auf. In eine dieser Ausnehmungen 13 kann entsprechend der Zuordnung der Transporteinrichtung 4 zu dem Plattenspeichermagazin 3 und der Einschublage des Plattenhalters 6 in das Aufnahmefach 10 ein Greifarm 14 der Auszugeinrichtung 11 der Transporteinrichtung 4 eingreifen, um den Plattenhalter 6 zu einem rechteckförmigen Tragarm 15 am Oberteil 16 der Transporteinrichtung 4 zu befördern. Dem Tragarm 15 sind an seiner Unterseite zwei in Richtung der Längsseiten 12 des Plattenhalters 6 verlaufende Halteschienen 17 für die Aufnahme des Plattenhalters 6 zugeordnet. Der Abstand der parallel zueinander verlaufenden Halteschienen 17 ist etwas größer als der Abstand zwischen den Längsseiten 12 des Plattenhalters 6, wodurch der Plattenhalter 6 von den Halteschienen 17 gleitbeweglich aufgenommen werden kann. Die Halteschiene 17 am freien Ende des Tragarms 15 ist unmittelbar an diesem befestigt, während die andere Halteschiene 17 am Unterteil 18 der Transporteinrichtung 4 angebracht ist. Aufgrund dieser Art der Lagerung des Plattenhalters 6 in dem Tragarm 15 bildet der Plattenhalter 6 mit der Unterseite des Tragarms 15 eine ebene Fläche, die es ermöglicht, eine Abspieleinheit 4 mit beliebiger äußerer Gestaltung in das Gehäuse 2 einzusetzen, da keine Vorsprünge oder dergleichen an der Unterseite des Tragarms 15 die erforderliche Abwärtsbewegung der Transporteinrichtung beim Auflegen einer Platte 5 auf den Plattenteller 8 durch ein Auftreffen auf die Abspieleinheit 4 behindern. Die Oberseite des Tragarms 15 ist als in sich geschlossene Abdeckung 19 für den darunterliegenden Plattenhalter 6 mit zugehöriger Platte 5 ausgeführt. Gleichzeitig dient die Abdeckung 19 in der Ausgangsstellung der Transporteinrichtung 4 kurz oberhalb der Abspieleinheit 7 als Staubschutz für die Abspieleinheit 7. Im Bereich der von dem Plattenhalter 6 aufgenommenen Platte 5 ist die Abdeckung 19 zur Beobachtung der Platte 5 als durchsichtige Scheibe 20 ausgebildet. Die Scheibe 20 trägt einen Sensor 21 zur tatsächlichen Überprüfung des Vorhandenseins einer Platte 5 in dem von dem Tragarm 15 der Transporteinrichtung 4 aufgenommenen Plattenhalter 6. Falls der Sensor 21 keine Platte in dem Plattenhalter 6 erkennt, wird dieser Plattenhalter 6 sofort wieder von der Transporteinrichtung 4 in das zugehörige Aufnahmefach 10 des Plattenspeichermagazins 3 zurückbefördert.

Ein Plattenandrücker 22 ist konzentrisch in die Scheibe 20 des Tragarms 15 der Transporteinrichtung 4 eingesetzt. Durch eine in der Längsachse der Antriebsachse des Plattentellers 8 der Abspieleinheit 4 liegende Öffnung 24 der Scheibe 20 erstreckt sich mit relativ großem Spiel ein Plattenandrückeinsatz 25 des Plattenandrückers 22. Der Plattenandrückeinsatz 25 nimmt mittig einen Magneten 26 auf, dem eine in die Unterseite eines die Öffnung 24 übergreifenden, aus Kunststoff bestehenden Deckels 27 eingeklipste, magnetisierbare Stahlplatte gegenüberliegt. Aufgrund der Wirkung zwischen dem Magneten 26 und der Stahlplatte 28 liegt der Plattenandrückeinsatz 25 in seiner Ruhestellung an der Stahlplatte 28 an. Wenn die Transporteinrichtung 4 mit dem Plattenandrücker 22 in ihre Endposition über den Plattenteller 8 fährt, dann wird der magnetische Schluß zwischen dem Magneten 26 und der magnetisierbaren Antriebsachse 23 des Plattentellers 8 größer als der magnetische Schluß zwischen dem Magneten 26 und der magnetisierbaren Stahlplatte 28, wodurch der Plattenandrückeinsatz 25 sich nach unten aus der Öffnung 24 heraus verschiebt und mit drei an seiner Unterseite um 120° zueinander versetzt angeordneten Noppen 29 die Platte 5 auf den Plattenteller 8 drückt. Sobald der Plattenandrücker 22 aus dieser Arbeitsstellung wieder herausgefahren wird, geht der Plattenandrück-Einsatz 25 aufgrund des magnetischen Flusses zwischen dem Magnet 26 und der Stahlplatte 28 in seine Ruhestellung zurück. Eine Ringschulter 30 des Plattenandrückeinsatzes 25 verhindert ein Herausziehen des Plattenandrück-Einsatzes 25 aus der Öffnung 24 in der Scheibe 20 des Tragarms 15. Anstelle der Stahlplatte 28 kann auch der Deckel 27 aus magnetisierbarem Material bestehen.

Der Greifarm 14 der Auszugeinrichtung 11 der Transporteinrichtung 4 ist in einem Schlitten 31 ein- und ausfahrbar gelagert, wobei der Schlitten 31 auf einer endseitig mit Anschlägen 32 versehenen Tragstange 33 im Unterteil 18 mittels eines Riementriebes 34 hin- und herbeweglich ist. In der Ausgangsstellung liegt der Schlitten 31 an dem Anschlag 32 an, und der Greifarm 14 ist dabei durch eine ihm zugeordnete Kulissensteuerung 35 in seiner eingefahrenen Stellung im Schlitten 31 gehalten. Die Kulissensteuerung 35 besteht aus einer mit dem Greifarm 14 verbundenen Kulisse 36 mit einer Führungsnut 37, in die ein an dem Oberteil 16 befestigter Stift 38 eintaucht. Der Schlitten 31 weist auf se-iner Oberseite einen vorderen Flansch 39 mit einer Durchbrechung 40, durch die sich der Greifarm 14 gleitbeweglich erstreckt, und einen hinteren Flansch 41 mit einer Durchbrechung 42, durch die sich die Kulisse 36 gleitbeweglich erstreckt, auf, wobei die Innenseite des vorderen Flansches 39 als Anschlag für die Kulisse 36 in der Ausfahrstellung des Greifarmes 14 dient. Die Unterseite des Schlittens 31 stützt sich im Bereich des Greifarmes 14 auf einer parallel zu der Tragstange 33 an dem Unterteil 18 angebrachten Schiene 43 ab. In der Ausgangsstellung des Schlittens 31 greift der über den hinteren Flansch 41 des Schlittens 31 vorstehende Teil der Kulisse 36 in eine als Gabelkoppler ausgeführte Lichtschranke 44 ein, um so diese Stellung des Schlittens 31 zu kontrollieren. Die Lichtschranke 44 ist auf einer Leiterplatte 45 angebracht, die über Halterungen 46 an dem Unterteil 18 befestigt ist. Bei einer Bewegung des Schlittens 31 aus seiner Ausgangsstellung von dem Anschlag 32 weg bewegt sich die Kulisse 36 aufgrund des Zusammenspiels zwischen dem feststehenden Stift 38 und der entsprechend gestalteten Führungsnut 37 in Richtung des vorderen Flansches 39 des Schlittens 31, wobei gleichzeitig der Greifarm 14 aus dem Schlitten 31 herausfährt und mit der ihm gegenüberliegenden Ausnehmung 13 des Plattenhalters 6 in Eingriff kommt. Kurz bevor der Stift 38 die Führungsnut 37 verläßt, kommt die Rückseite 47 der Kulisse 36 mit einer an dem Oberteil 16 ausgebildeten Anschlagschiene 48 zur Anlage, um ein Herausgleiten des Greifarms 14 aus seiner ausgefahrenen Stellung zu verhindern. Die Anschlagschiene 48 ist über zwei Halterungen 49 mit dem Unterteil verbunden. Um eine exakte Ausrichtung der durch den Schlitten 31 in den Tragarm 15 beförderten Platte 5 zu dem Plattenteller 8 der Abspieleinheit 7 zu gewährleisten, ist an der Vorderseite des Unterteils 16 ein die mittige Lage des Plattenhalters 6 in dem Tragarm 15 feststellender Sensor 50 angebracht. Der Sensor 50 umfaßt einen im Lager 51 verschwenkbar aufgenommenen zweiarmigen Hebel 52, dessen einer Arm 53 über eine an ihm in der Mittenachse 54 des Tragarms 15 ausgebildete Noppe 55 mit einer mittigen Noppe 56 an der Unterseite des Plattenhalters 6 und dessen anderer, durch eine Zugfeder 57 beaufschlagter Arm 58 über eine endseitige Abwinklung 59 mit einem in dem Unterteil 18 untergebrachten Gabelkoppler 60 zusammenwirkt. Neben dem Gabelkoppler 60 befindet sich ein weiterer als Gabelkoppler ausgebildeter Sensor 61, in den ein hinter der Abspieleinheit 7 angeordneter Steg zur Feststellung der Endposition des Tragarmes 15 über der Abspieleinheit 7 eintaucht.

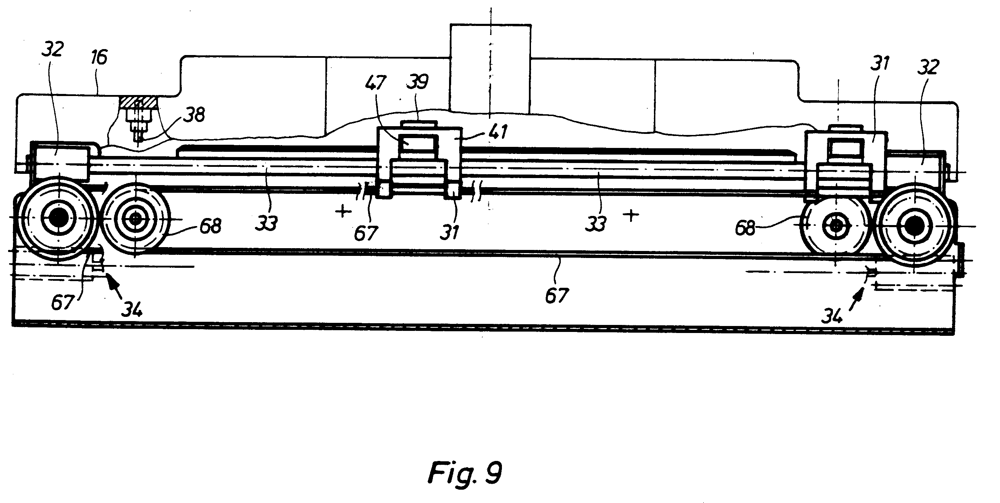

Zu dem Riementrieb 34 für die Bewegung des Schlittens 31 gehört ein Schneckengetriebe 62 und ein drehrichtungsumkehrbarer Motor 63. Das Schneckenrad 64 des Schneckengetriebes 62 ist über eine federbelastete Rutschkupplung 65 mit dem Antriebsrad 66 für den Zahnriemen 67 des Riementriebes 34 verbunden. Der endlose Zahnriemen 67 ist über eine in entsprechendem Abstand zu dem Antriebsrad 66 an dem Unterteil 18 angebrachte Umlenkrolle 68 geführt und an dem Schlitten 31 befestigt. Der linke Schlitten 31 nach Fig. 9 ist mit dem hinteren Zahnriemen 67 verbunden, während der rechte Schlitten 31 mit dem vorderen Zahnriemen 67 gekoppelt ist. Bei der Herausnahme eines Plattenhalters 6 aus einem Aufnahmefach 10 mittels des Schlittens 31 der einen Auszugeinrichtung 11 dient der Schlitten 31 der anderen Auszugeinrichtung 11 in der Endlage des Plattenhalters auf den Halteschienen 17 des Tragarms 15 der Transporteinrichtung 4 in der die in dem Plattenhalter 6 gespeicherten Platte 5 konzentrisch zu dem Plattenteller 8 der Abspieleinheit 7 ausgerichtet ist, als Anschlag. Zur Überwachung dieser Lage der Platte 5 dient der Sensor 50.

Sämtliche Bewegungsabläufe des Plattenabspielgerätes 1 werden durch eine zentrale Steuereinheit gesteuert und überwacht. Ist beispielsweise eine im rechten Plattenspeichermagazin 3 aufbewahrte Platte 5 mittels der Tastatur auf der Bedienungstafel ausgewählt worden, dann fährt die Transporteinrichtung 4 aus ihrer Ausgangsstellung über der Abspieleinheit 7 auf eine Höhe, die mit der Höhe des Aufnahmefaches 10 des Plattenspeichermagazins 3 übereinstimmt, in welchem der Plattenhalter 6 mit der ausgewählten Platte 5 liegt. Dann wird die dem Plattenspeichermagazin 3 zugewandte Auszugeinrichtung 11 der Transporteinrichtung 4 in Tätigkeit gesetzt, wodurch zunächst der Greifarm 14 des Schlitten 31 aufgrund der Kulissensteuerung 35 in die ihm zugewandte Ausnehmung 13 des Plattenhalters 6 eingreift und anschliessend durch die Bewegung des Schlittens 31 bis zu seinem Anschlag an dem anderen Schlitten 31 der Plattenhalter 6 mit der Platte 5 von dem Aufnahmefach 10 auf die Halteschienen 17 des Tragarms 15 der Transporteinrichtung 4 befördert wird. Sobald der Plattenhalter 6 seine endgültige, über den Sensor 50 überwachte Lage auf den Halteschienen 17 eingenommen hat, bewegt sich die Transporteinrichtung 4 in Richtung der Abspieleinheit 7. Unter Freigabe der Platte 5 aus dem Plattenhalter 6 wird der Zentralbereich der Platte 5 auf den Plattenteller 8 aufgesetzt. Gleichzeitig wird in dieser Endposition der Transporteinrichtung 4 der Plattenandrück-Einsatz 25 des Plattenandrückers 22 aufgrund der Anziehungskraft zwischen dem Magneten 26 und der Antriebsachse 23 des Plattentellers 8 gegen die Oberseite der Platte 5 gedrückt. Wird der Plattenteller 8 der Abspieleinheit 7 in Drehung versetzt, wodurch über den Abspielkopf 9 die auf der Platte 5 gespeicherte Information auf optischem Wege ausgelesen und anschließend über entsprechende Lautsprecher wiedergegeben werden kann. Nach Beendigung der Informationsauslesung von der Platte 5 wird diese in analoger Weise von der Transporteinrichtung 5 in ihr zugehöriges Aufnahmefach 10 zurückbefördert. Dann fährt die Transporteinrichtung 4 leer in ihre Endposition über die Abspieleinheit 7, in der die Abdeckung 19 des Tragarmes 15 insbesonder den Abspielkopf 9 der Abspieleinheit 7 vor Verschmutzung und unsachgemäßem Zugriff schützt.

Vorstehende Zeichnungsbeschreibung hat die Konstruktion sowie die Anwendung des erfindungsgemäßen Plattenabspielgerätes in seinen Einzelheiten verdeutlicht. Es versteht sich jedoch für den Fachmann, daß der Grundgedanke der vorliegenden Erfindung eine wesentlich breitere Anwendung finden kann und nicht auf das hier speziell betrachtete Ausführungsbeispiel beschränkt ist.

## Patentansprüche

1. Plattenabspielgerät mit mindestens einem Plattenspeichermagazin (3), das eine Vielzahl übereinanderliegend in Aufnahmefächern (10) gelagerter, jeweils eine Platte (5) aufnehmender Plattenhalter (6) umfaßt, und mit einer in Stapelrichtung des Plattenspeichermagazins (3) verfahrbaren Transporteinrichtung (4) zur Hin- und Herbeförderung einer gewünschten Platte (5) mit dem zugehörigen Plattenhalter (6) zwischen dem Aufnahmefach (10) und einer Abspieleinheit (7), wobei die Transporteinrichtung (4) eine auf dieser horizontal verfahrbare Auszugeinrichtung (11) für die Plattenhalter (6), einen Plattenandrücker (22) für die Verspannung der abzuspielenden Platte (5) mit dem Plattenteller (8) der Abspieleinheit (7) und einen Tragarm (15) für die Aufnahme eines Plattenhalters (6) aufweist, dadurch gekennzeichnet, daß der verfahrbare Tragarm (15) an seiner Oberseite mit einer den Plattenhalter (6) mit innenliegender Platte (15) übergreifenden Abdeckung (19) versehen ist, die eine in der Längsachse der Antriebsachse (23) des Plattentellers (8) der Abspieleinheit (7) liegende Öffnung (24) aufweist, in die der Plattenandrücker (22) eingesetzt ist.

2. Plattenabspielgerät nach Anspruch 1, dadurch gekennzeichnet, daß die Abdeckung (19) des Tragarms (15) im Bereich der Platte (5) als durchsichtige Scheibe (20) ausgebildet ist.

3. Plattenabspielgerät nach einem oder mehreren der Ansprüche 1 oder 2, dadurch gekennzeichnet, daß der Plattenandrücker (22) einen mit relativ großem Spiel in der Öffnung (24) der Abdeckung (19) angeordneten Plattenandrück-Einsatz (25) mit einem mittigen Magneten (26) umfaßt, der in der Ruhestellung des Plattenandrück-Einsatzes (25) mit einer in einen die Öffnung (24) abschließenden Deckel (27) eingesetzten, magnetisierbaren Stahlplatte (28) und in der Arbeitsstellung des Plattenandrück-Einsatzes (25) mit der magnetisierbaren Antriebsachse (23) des Plattentellers (8) der Abspieleinheit (7) zusammenwirkt.

4. Plattenabspielgerät nach einem der Ansprüche 1 bis 3, dadurch gekennzeichnet, daß dem Tragarm (15) an seiner Unterseite zwei im etwas größerem Abstand als die Breite des Plattenhalters (6) parallel zueinander verlaufende Halteschienen (17) für den Plattenhalter (6) zugeordnet sind.

5. Plattenabspielgerät nach einem der Ansprüche 1 bis 4, dadurch gekennzeichnet, daß dem Tragarm (15) ein Sensor (21) zur Überwachung des tatsächlichen Vorhandenseins einer Platte (5) in dem Plattenhalter (6) zugeordnet ist.

6. Plattenabspielgerät nach einem der Ansprüche 1 bis 5, dadurch gekennzeichnet, daß dem Tragarm (15) eine Abtasteinrichtung zur Feststellung der Durchmessergröße der Platte (5) in dem Plattenhalter (6) zugeordnet ist.

7. Plattenabspielgerät nach einem der Ansprüche 1 bis 6, dadurch gekennzeichnet, daß dem Tragarm (15) mittig ein Sensor (50) zur Überwachung der konzentrischen Lage der im Plattenhalter (6) gespeicherten Platten (5) zu dem Plattenteller (8) der Abspieleinheit (7) zugeordnet ist.

8. Plattenabspielgerät nach einem der Ansprüche 1 bis 7, dadurch gekennzeichnet, daß im Unterteil (18) der Transporteinrichtung (4) ein Sensor (61) zur Feststellung der Endposition des Tragarmes (15) über der Abspieleinheit (7) angeordnet ist.

9. Plattenabspielgerät nach einem der Ansprüche 1 bis 8, bei dem ein in einem hin- und herbeweglichen Schlitten (31) der Auszugeinrichtung (11) ein- und ausfahrbar gelagerter Greifarm (14) mit einer zugeordneten Ausnehmung (13) des Plattenhalters (6) in Eingriff bringbar ist und der Greifarm (14) in seiner Ausfahrstellung durch einen feststehenden Anschlag (48) verbleibt, dadurch gekennzeichnet, daß der Greifarm (14) in der Ausgangsstellung des Schlittens (31) durch eine Kulissensteuerung (35) in seiner eingefahrenen Stellung derart gehalten ist, daß er bei einer Bewegung des Schlittens (31) aus der Ausgangsstellung durch die Kulissensteuerung (35) in die ausgefahrene, in die Ausnehmung (13) des Plattenhalters (6) eingreifende Stellung übergeht.

10. Plattenabspielgerät nach einem der Ansprüche 1 bis 9, dadurch gekennzeichnet, daß die Kulissensteuerung (35) eine mit dem Greifarm (14) verbundene Kulisse (36) und einen in eine Führungsnut (37) der Kulisse (37) eintauchenden, am Oberteil (16) der Transporteinrichtung (4) befestigten Stift (38) umfaßt.

11. Plattenabspielgerät nach einem der Ansprüche 1 bis 10, dadurch gekennzeichnet, daß die Führungsnut (37) der Kulisse (36) derart ausgebildet ist, daß bei einer Bewegung des Schlittens (31) in die von einem Anschlag (32) begrenzte Ausgangsstellung der Stift (38) zunächst mit der Führungsnut (37) in Eingriff kommt und anschließend über die Kulisse (36) den Greifarm (14) in seine eingefahrene Stellung im Schlitten (31) zurückzieht.

12. Plattenabspielgerät nach einem der Ansprüche 1 bis 11, dadurch gekennzeichnet, daß der auf einer Tragstange (33) gleitbeweglich geführte Schlitten (31) auf seiner Oberseite zwei gegenüberliegende Flansche (39, 41) mit Durchbrechungen (40, 42) aufweist, in denen einerseits die Kulisse (36) und andererseits der Greifarm (14) gleitbeweglich geführt ist.

13. Plattenabspielgerät nach einem der Ansprüche 1 bis 12, dadurch gekennzeichnet, daß die Innenseite des den Greifarm (14) aufnehmenden Flansches (39) des Schlittens (31) als Anschlag für die Kulisse (36) in der Ausfahrstellung des Greifarmes (14) dient.

14. Plattenabspielgerät nach einem der Ansprüche 1 bis 13, dadurch gekennzeichnet, daß der Schlitten (31) sich im Bereich des Greifarmes (14) auf einer paralell zu der Tragstange (33) verlaufenden Schiene (43) abstützt.

15. Plattenabspielgerät nach einem der Ansprüche 1 bis 14, dadurch gekennzeichnet, daß der Kulisse (36) des Greifarmes (14) eine Lichtschranke (44) zur Erkennung der Ausgangsstellung des Schlittens (31) zugeordnet ist.

16. Plattenabspielgerät nach einem der Ansprüche 1 bis 15, dadurch gekennzeichnet, daß der Schlitten (31) über einen Riementrieb (34) mit Schneckengetriebe (62) und drehrichtungsumkehrbarem Motor (63) antreibbar ist, wobei zwischen dem Schneckengetriebe (62) und dem Antriebsrad (66) des Zahnriemens (67) des Riementriebes (34) eine Rutschkupplung (65) vorgesehen ist.

17. Plattenabspielgerät nach einem der Ansprüche 1 bis 16, dadurch gekennzeichnet, daß bei zwei einander gegenüberliegenden Plattenspeichermagazinen (3) auf der Tragstange (33) ein weiterer Schlitten (31), der über einen weiteren Riementrieb (34) mit Schneckengetriebe (62), Rutschkupplung (65) und drehrichtungsumkehrbarem Motor (63) antreibbar ist, gleitbeweglich geführt ist, und daß zur Betätigung des Greifarmes (14) dieses Schlittens (31) dieser ebenfalls mit einer Kulisse (36) mit einer entsprechend verlaufenden Führungsnut (37) verbunden ist, der ein weiterer entsprechend am Oberteil (16) der Transporteinrichtung (4) angeordneter Stift (38) zugeordnet ist.

## Claims

1. Disc player apparatus comprising at least one disc magazine (3) which includes a plurality of disc containers (6) stored one above the other in receiving compartments (10), each holder receiving one disc (5), and comprising a transport arrangement (4) which is driveable in the direction of the stack of the disc magazine (3) for the to-and-fro transporting of a desired disc (5) with the disc container (6) belonging to it between the disc receiving compartment (10) and a player unit (7), wherein the transport arrangement (4) comprises an extractor device (11) for the disc container (6) which can be moved horizontally to the transport arrangement (4), a disc pressing-down member (22) to constrain the disc (5) being played with the turntable (8) of the player unit (7), and a carrying arm (15) for receiving a disc container (6) CHARACTERIZED IN THAT the carrying arm can be driven and is provided on its upper side with a covering (19) which extends outward of the disc container (6) with its disc (15) contained inside, the covering (19) comprising an opening (24) located on the longitudinal axis of the drive shaft (23) of the turntable (8) of the player unit (7), in which opening the disc pressing-down member (22) is inserted.

2. Disc player apparatus according to Claim 1 CHARACTERIZED IN THAT in the region of the disc (5), the covering (19) of the carrying arm (15) is formed as a transparent disc (20).

3. Disc player apparatus according to Claim 1 or 2 CHARACTERIZED IN THAT the disc pressing-down member (22) comprises a disc-pressing insert (25) arranged with a central magnet (26) and with relatively large free play in the opening (24) of the covering (19), which magnet (26), in the rest position of the disc-pressing-on insert (25), cooperates with a magnetizable steel plate (28) which is inserted in a lid (27) closing the opening (24), and, in the working position of the disc-pressing-on insert (25), cooperates with the magnetizable drive shaft (23) of the turntable (8) of the player unit (7).

4. Disc player apparatus according to any of Claims 1-3 CHARACTERIZED IN THAT there are provided on the lower side of the carrying arm (15) two support rails (17) for the disc container (6) which support rails (17) extend parallel to each other with a somewhat larger spacing than the width of the disc container (6).

5. Disc player apparatus according to any one of Claims 1-4 CHARACTERIZED IN THAT the carrying arm (15) is provided with a sensor (21) for monitoring the actual presence of a disc (5) in the disc container (6).

6. Disc player apparatus according to any one of Claims 1-5 CHARACTERIZED IN THAT
the carrying arm (15) is provided with a scanning arrangement to ascertain the diametrical size of the disc (5) in the container (6).

7. Disc player apparatus according to any one of Claims 1-6 CHARACTERIZED IN THAT the carrying arm (15) is provided centrally with a sensor (50) to monitor the concentricity of the disc (5) stored in the container (6) relative to the turntable (8) of the player unit (7).

8. Disc player apparatus according to any one of Claims 1-7 CHARACTERIZED IN THAT a sensor (61) is arranged in the lower part (18) of the transport arrangement (4) to establish the final position of the carrying arm (15) above the player unit (7).

9. Disc player apparatus in which an engaging arm (14) is journalled in a sliding carriage (31) of the extractor device (11) so as to be drivable inwards or outwards, said sliding carriage (31) being movable to and fro, wherein the engaging arm (14) can be brought into engagement with an aperture (13) provided in the disc container (6) and the engaging arm (14) remains in its outward position by virtue of a fixed detent (48), CHARACTERIZED IN THAT when the sliding carriage (31) is in its departure position the engaging arm (14) is held in its inward position by a piston control (35) in such a way, that, on a movement of the sliding carriage (31) from its departure position, due to the piston control (35) the engaging arm (14) goes over into its outward position engaged in the opening (13) of the disc container (6).

10. Disc player apparatus according to any one of Claims 1-9 CHARACTERIZED IN THAT the piston control (35) comprises a piston (36) connected with the engaging arm (14), and a peg (38) which is fixed in the upper part of the transport arrangement (4) and which projects into a guiding groove (37) of the piston (36).

11. Disc player apparatus according to any one of Claims 1-10 CHARACTERIZED IN THAT the guiding groove (37) of the piston (36) is so shaped, that on a movement of the sliding carriage (31) in its departure position limited by a detent (32), the peg (38) comes into engagement first with the guiding groove (37) and then draws back the engaging arm (14) by means of the piston (36) into its inwardly driven position in the sliding carriage (31)

12. Disc player apparatus according to any one of Claims 1-11 CHARACTERIZED IN THAT the sliding carriage (31) is guided slidingly on a support bar (33), and carries on its upper surface two oppositely located flanges (39,41) with through holes (40,42), in which on one side the engaging arm (14), and on the other side the piston (36) are slidably guided.

13. Disc player apparatus according to any one of Claims 1-12 CHARACTERIZED IN THAT the inner face of the flange (39) of the sliding carriage (31) receiving the engaging arm (14), serves as detent for the piston (36) in the outward position of the engaging arm (14).

14. Disc player apparatus according to any one of Claims 1-13 CHARACTERIZED IN THAT the sliding carriage (31) is supported in the vicinity of the engagement arm (14) on a rail (43) which extends parallel to the support bar (33).

15. Disc player apparatus according to any one of Claims 1-14 CHARACTERIZED IN THAT a photo-electric path (44) is provided for the piston (36) of the engaging arm (14) in order to identify the departure position of the sliding carriage (31).

16. Disc player apparatus according to any one of Claims 1-15 CHARACTERIZED IN THAT the sliding carriage (31) is drivable through a belt drive (34) with worm gearing (62) and a motor (63) which is reversible as to direction of rotation, and a slip clutch (65) is provided between the worm gearing (62) and the driving wheel (66) of the toothed belt (67) of the belt drive (34).

17. Disc player apparatus according to any one of Claims 1-16 CHARACTERIZED IN THAT there are two oppositely located disc storage magazines (3), and a further sliding carriage (31) is slidably guided on the support bar (33), and is drivable by means of a further belt drive (34) having worm gearing (62), slip clutch (65) and reversible motor (63), and, for actuating the engaging arm (14) of the latter sliding carriage (31), this arm (14) is connected likewise with a piston (36) having a correspondingly extending guide groove (37), and this groove is provided with a corresponding further peg (38) arranged on the upper part (16) of the transport arrangement (4).

## Revendications

1. Juke-box comprenant au moins un magasin de disques (3), qui contient une pluralité de supports de disques (6) rangés en superposition dans des logements (10) et supportant chacun un disque (5), et comprenant un dispositif de transport (4) déplaçable dans le sens d'empilage du magasin de disques (3) pour transférer en va-et-vient un disque souhaité (5), avec le support de disque correspondant (6), entre le logement (10) et une unité de lecture (7), le dispositif de transport (4) comportant un dispositif d'extraction à déplacement horizontal (11) pour les supports de disques (6), un presse-disque (22) pour solidariser le disque à lire (5) au plateau (8) de l'unité de lecture (7) et un bras porteur (15) pour recevoir le support de disque (6), caractérisé en ce que, sur sa face supérieure, le bras porteur mobile (15) est muni d'un capot (19) qui recouvre le support de disque (6) dans lequel est placé le disque (5) et qui comporte une ouverture (24) qui se trouve sur l'axe longitudinal de l'axe d'entraînement (23) du plateau (8) de l'unité de lecture (7) et dans laquelle est inséré le presse-disque (22).

2. Juke-box selon la revendication 1, caractérisé en ce que, dans la zone du disque (5), le capot (19) du bras porteur (15) est conçu sous la forme d'une plaque transparente (20).

3. Juke-box selon une ou plusieurs des revendications 1 ou 2, caractérisé en ce que le presse-disque (22) comprend un galet presse-disque (25), inséré avec un jeu relativement grand dans l'ouverture (24) du capot (19), avec un aimant central (26) qui, lorsque le galet presse-disque (25) est en position de repos, coopère avec une plaque métallique magnétisable (28) logée dans un couvercle (27) fermant l'ouverture (24) et, lorsque le galet presse-disque (25) est en position de travail, coopère avec l'axe d'entraînement magnétisable (23) du plateau (8) de l'unité de lecture (7).

4. Juke-box selon l'une des revendications 1 à 3, caractérisé en ce que le bras porteur (15) comporte, sur sa face inférieure, deux glissières de retenue parallèles (17) pour le support de disque (6) dont l'écartement est légèrement supérieur à la largeur du support de disque (6).

5. Juke-box selon l'une des revendications 1 à 4, caractérisé en ce que le bras porteur (15) comporte un capteur (21) pour contrôler la présence effective d'un disque (5) dans le support de disque (6).

6. Juke-box selon l'une des revendications 1 à 5, caractérisé en ce que le bras porteur (15) comporte un dispositif palpeur pour vérifier le diamètre du disque (5) dans le support de disque (6).

7. Juke-box selon l'une des revendications 1 à 6, caractérisé en ce que le bras porteur (15) comporte en position centrée un capteur (50) pour contrôler la position concentrique des disques (5) rangés dans le support de disque (6) par rapport au plateau (8) de l'unité de lecture (7).

8. Juke-box selon l'une des revendications 1 à 7, caractérisé en ce qu'un capteur (61) est disposé dans la partie inférieure (18) du dispositif de transport (4) pour contrôler la position extrême du bras porteur (15) au-dessus de l'unité de lecture (7).

9. Juke-box selon l'une des revendications 1 à 8, dans lequel un bras preneur (14), qui peut être entré et sorti et est monté dans un chariot (31) à déplacement en va-et-vient du dispositif d'extraction (11), peut être amené en prise avec un évidement correspondant (13) du support de disque (6), et le bras preneur (14) est maintenu en position sortie par une butée fixe (48), caractérisé en ce que, lorsque le chariot (31) est en position initiale, le bras preneur (14) est maintenu en position rentrée par une commande à coulisse (35), de façon que, lorsque le chariot (31) quitte la position initiale, le bras preneur (14) soit amené par la commande à coulisse (35) dans la position sortie où il est en prise avec l'évidement (13) du support de disque (6).

10. Juke-box selon l'une des revendications 1 à 9, caractérisé en ce que la commande à coulisse (35) comporte une coulisse (36) reliée au bras preneur (14) et une broche (38) qui pénètre dans une rainure de guidage (37) de la coulisse (36) et qui est fixée à la partie supérieure (16) du dispositif de transport (4).

11. Juke-box selon l'une des revendications 1 à 10, caractérisé en ce que la rainure de guidage (37) de la coulisse (36) est conçue de façon que, lorsque le chariot (31) adopte la position initiale délimitée par une butée (32), la broche (38) vienne d'abord en prise avec la rainure de guidage (37) puis, par l'intermédiaire de la coulisse (36), ramène le bras preneur (14) dans sa position rentrée dans le chariot (31).

12. Juke-box selon l'une des revendications 1 à 11, caractérisé en ce que le chariot (31) guidé de manière coulissante sur une tige porteuse (33) comporte, sur sa face supérieure, deux collets opposés (39, 41) pourvus de découpes (40, 42) dans lesquelles passent, d'une part, la coulisse (36) et, d'autre part, le bras preneur (14).

13. Juke-box selon l'une des revendications 1 à 12, caractérisé en ce que la face intérieure du collet (39) du chariot (31) traversé par le bras preneur (14) sert de butée à la coulisse (36) lorsque le bras preneur (14) est en position sortie.

14. Juke-box selon l'une des revendications 1 à 13, caractérisé en ce que, dans la zone du bras preneur (14), le chariot (31) prend appui sur une glissière (43) parallèle à la tige porteuse (33).

15. Juke-box selon l'une des revendications 1 à 14, caractérisé en ce que la coulisse (36) du bras preneur (14) comporte un barrage photo-électrique (44) pour détecter la position initiale du chariot (31).

16. Juke-box selon l'une des revendications 1 à 15, caractérisé en ce que le chariot (31) est entraîné par l'intermédiaire d'une transmission à courroie (34) associée à un engrenage à vis sans fin (62) et à un moteur (63) dont le sens de rotation peut être inversé, un accouplement à friction (65) étant prévu entre l'engrenage à vis sans fin (62) et la roue d'entraînement (66) de la courroie crantée (67) de la transmission à courroie (34).

17. Juke-box selon l'une des revendications 1 à 16, caractérisé en ce qu'en présence de deux magasins de disques (3) en vis-à-vis, un chariot supplémentaire (31) entraîné par une transmission à courroie supplémentaire (34) avec engrenage à vis sans fin (62), accouplement à friction (65) et moteur à sens de rotation inversable (63) est guidé de manière coulissante sur la tige porteuse (33), et en ce que, pour actionner le bras preneur (14) de ce chariot (31), led
it bras preneur (14) est également relié à une coulisse (36) pourvue d'une rainure de guidage (37) qui présente un tracé correspondant et à laquelle est associée une autre broche (38) fixée à la partie supérieure (16) du dispositif de transport (4).
